# EUROPÄISCHE PATENTSCHRIFT

(11) **EP 1 756 125 B1**
(45) Veröffentlichungstag und Bekanntmachung des Hinweises auf die Patenterteilung: **10.11.2010**
(21) Anmeldenummer: 05707288.6
(22) Anmeldetag: 09.02.2005
(51) Int. Cl.: C07F 9/06, C05G 3/08

(54) **1,1,3,3,3-PENTAAMINO-1-OXO/THIO-1LAMBDA5,3LAMBDA5-DIPHOSPHAZ-2-ENES, VERFAHREN ZU IHRER HERSTELLUNG UND DEREN VERWENDUNG ALS MITTEL ZUR REGULIERUNG BZW. HEMMUNG DER ENZYMATISCHEN HARNSTOFF-HYDROLYSE**
1,1,3,3,3-PENTAAMINO-1-OXO/THIO-1LAMBDA5,3LAMBDA5-DIPHOSPHAZ-2-ENES, METHOD FOR PRODUCING THEM AND THEIR USE AS AGENTS FOR REGULATING OR INHIBITING ENZYMATIC HYDROLYSIS OF UREA
1,1,3,3,3-PENTAAMINO-1-OXO/THIO-1LAMBDA5,3LAMBDA5-DIPHOSPHAZ-2-ENES, LEURS PROCEDES DE PRODUCTION, ET LEUR UTILISATION EN TANT QU'AGENTS POUR REGULER OU INHIBER L'HYDROLYSE ENZYMATIQUE D'UREE

(30) Priorität: 28.05.2004 DE 102004026143
(43) Veröffentlichungstag der Anmeldung: 28.02.2007
(73) Patentinhaber: SKW STICKSTOFFWERKE PIESTERITZ GmbH, 06886 Lutherstadt Wittenberg (DE)
(72) Erfinder: HUCKE, André, 06898 Reinsdorf (DE); NICLAS, Hans-Joachim, 12435 Berlin (DE); WOZNIAK, Hartmut, 04451 Cunnersdorf (DE); MICHEL, Hans-Jürgen, 04827 Machern (DE); SCHUSTER, Carola, 06130 Halle/Saale (DE)
(74) Vertreter: Schneider, Michael
(86) Internationale Anmeldenummer: PCT/EP2005/001300
(87) Internationale Veröffentlichungsnummer: WO 2005/118602

(56) Entgegenhaltungen:
- WO-A-00/58317
- WO-A-00/61522
- WO-A-01/87898
- WO-A-02/083697
- DE-A1- 10 252 382
- DE-A1- 10 317 895
- US-A- 4 670 038
- STOCK, NORBERT ET AL: "Phosphorus oxonitridosodalites: synthesis using a molecular precursor and structural investigation by X-ray and neutron powder diffraction and 31P MAS NMR spectroscopy" CHEMISTRY, A EUROPEAN JOURNAL, Bd. 4, Nr. 9, 1998, Seiten 1822-1828, XP009049748 ISSN: 0947-6539
- HORSTMANN, STEFAN ET AL: "Synthese, Kristallstruktur und Eigenschaften von Phosphor(V)-nitridimid HP4N7 - Synthesis, crystal structure, and properties of phosphorus(V) nitride imide HP4N7" ZEITSCHRIFT FUER ANORGANISCHE UND ALLGEMEINE CHEMIE, Bd. 624, Nr. 2, 1998, Seiten 221-227, XP009049752 ISSN: 0044-2313
- HORSTMANN, STEFAN ET AL: "Phosphorus(V) nitride imide HP4N7: synthesis from a molecular precursor and structure determination with synchrotron powder diffraction" ANGEWANDTE CHEMIE, INTERNATIONAL EDITION, Bd. 36, Nr. 18, 1997, Seiten 1992-1994, XP001206490 ISSN: 0570-0833
- HORSTMANN, STEFAN ET AL: "Synthese, Kristallstruktur und Eigenschaften von 1,1,3,3,3-pentaamino-1-thio-1?5,3?5-diphos phaz-2-en (NH2)2(S)P-N=P(NH2)3 - Synthesis, crystal structure, and properties of 1,1,3,3,3-pentaamino-1- thio-1?5,3?5-diphosphaz-2-ene (NH2)2(S)P-N=P(NH2)3" ZEITSCHRIFT FUER NATURFORSCHUNG, B: CHEMICAL SCIENCES, Bd. 52, Nr. 4, 1997, Seiten 490-495, XP009050088 ISSN: 0932-0776
- STOCK, N. ET AL: "Synthese, Kristallstruktur und Eigenschaften von 1,1,3,3,3-pentaamino-1-oxo-1?5,3?5-diphosp haz-2-en, (NH2)2(O)P-N=P(NH2)3 - Synthesis, crystal structure, and properties of 1,1,3,3,3-pentaamino-1-oxo-1?5,3?5-diphosp haz-2-ene, (NH2)2(O)P-N=P(NH2)3" ZEITSCHRIFT FUER NATURFORSCHUNG, B: CHEMICAL SCIENCES, Bd. 51, Nr. 8, 1996, Seiten 1079-1083, XP009049754 ISSN: 0932-0776
- TOEPELMANN, WERNER ET AL: "Zur Hydrolyse von Triamidophosphazotriamidophosphonium- chlorid - Hydrolysis of triamidophosphazo- triamidophosphonium chloride" ZEITSCHRIFT FUER CHEMIE, Bd. 24, Nr. 4, 1984, Seiten 134-135, XP001206489 ISSN: 0044-2402

## Beschreibung

Die vorliegende Erfindung betrifft neue 1,1,3,3,3-Pentaamino-1-oxo/thio-1λ⁵,5,3λ⁵-diphosphaz-2-ene, Verfahren zu ihrer Herstellung, diese enthaltende Zusammensetzungen und die Verwendung dieser 1,1,3,3,3-Pentaamino-1-oxo/thio-1λ⁵,3λ⁵-diphosphaz-2-ene oder diese enthaltenden Zusammensetzungen als Mittel zur Regulierung bzw. Hemmung der enzymatischen (ureasekatalysierten) Harnstoff-Hydrolyse (auch in Kombination mit Mitteln zur Einschränkung der Nitrifikation) zur Vermeidung von Stickstoffverlusten bei der Anwendung harnstoffbasierter Düngemittel, sowie zur Reduzierung der Ammoniakbelastung in Tierställen infolge einer weitestgehenden Ausschaltung der Harnstoff-Hydrolyse und als Zusatz zu Futterharnstoff im Rahmen der Tierernährung, speziell von Wiederkäuern. Die Erfindung betrifft weiterhin Düngemittelzusammensetzungen, welche 1,1,3,3,3-Pentaamino-1-oxo/thio-1λ⁵,3λ⁵-diphosphaz-2-ene und ein harnstoffbasiertes Düngemittel enthalten.

Harnstoff ist ein ursprünglich biogenes Stoffwechselprodukt, das durch das Enzym Urease in Ammoniak und Kohlendioxid gespalten wird. Die Reaktion verläuft außerordentlich schnell und effektiv und ist somit für N-Verluste bei der Anwendung von harnstoffbasierten Düngemitteln verantwortlich. Diese sind besonders hoch, wenn der Boden nicht über eine ausreichende Sorptionskraft verfügt, um das frei gewordene Ammoniak in Form von Ammoniumionen zu binden. Dadurch gehen der Landwirtschaft jährlich beträchtliche Mengen an Stickstoff verloren, die auf diese Weise zur Umweltbelastung beitragen und andererseits einen erhöhten Düngemittelbedarf erfordern.

Darüber hinaus können unter ungünstigen Klimabedingungen und/oder bei Ausbringung auf leichte Böden spontan hohe Ammoniakkonzentrationen im Boden auftreten, die dann zusätzlich die Keimung und das Auflaufen der Jungpflanzen negativ beeinträchtigen.

Da Harnstoff das Stickstoffdüngemittel mit dem prozentual größten N-Gehalt und der weltweit mit Abstand dominierende N-Dünger ist, wird die Suche nach praktikablen Lösungen zur Reduzierung der ureasebedingten N-Verluste verständlich. Um dieses Ziel zu erreichen, ist eine Vielzahl von Lösungen vorgeschlagen worden. Zu nennen sind in diesem Zusammenhang die saure Umhüllung von Harnstoffprills oder -granalien, um auf diese Weise entstehenden Ammoniak durch Salzbildung abfangen zu können oder das Coating mit Substanzen, wodurch Harnstoff verlangsamt freigesetzt wird und somit das entstehende Ammoniak problemlos »abgepuffert« werden kann.

Außerdem verursacht die ureasekatalysierte Harnstoff-Hydrolyse durch Spaltung des in Kot und vor allem in Harn befindlichen Harnstoffs in Tierställen zum Teil erhebliche Ammoniaklasten, die - abgesehen von einer Geruchsbelästigung bei entsprechend hoher Konzentration - die Entwicklung und das Wachstum der Tiere negativ beeinflussen.

Die N-Verluste aus der ureasekatalysierten Hydrolyse des Harnstoffs und der Nitrifikation können unter ungünstigen Bedingungen, besonders in tropischen und subtropischen Klimaten, bis zu 50 % betragen. Um dieses Verlustpotenzial zu minimieren, werden bedarfsgerecht mehrfach geteilte Düngergaben empfohlen, die jedoch für den Landwirt infolge zusätzlicher Applikationskosten mit erheblichen arbeitswirtschaftlichen Nachteilen und entsprechenden Mehraufwendungen verbunden sind.

Möglichkeiten zur Einschränkung der Stickstoffverluste bestehen in der gezielten Hemmung der ureasekatalysierten Harnstoff-Hydrolyse auf der einen und der Nitrifikationshemmung auf der anderen Seite. Dabei erscheint im ersten Fall der Einsatz solcher Substanzen aussichtsreich, die zu einer Ureasehemmung führen, wobei sich neben der Anwendung für Düngungszwecke selbstverständlich auch die Anwendung zur Minimierung der Ammoniakbelastung in Tierställen oder deren Zusatz zu Futterharnstoff anbietet.

Der Einsatz von Ureaseinhibitoren ist eine effektive Möglichkeit, die unter Normalbedingungen außerordentlich schnell verlaufende enzymatische Harnstoff-Hydrolyse deutlich zu verlangsamen. Durch die Verzögerung dieser Enzymreaktion kann der Düngeharnstoff unzersetzt in tiefere Bodenschichten penetrieren.

Damit sind Ammoniakverluste durch das Sorptionspotential der darüber befindlichen Bodenschichten, anders als an der Bodenoberfläche, nahezu ausgeschlossen. Außerdem gelingt es auf diesem Wege, Harnstoff und harnstoffhaltige Dünger für leichte Bodenstandorte verlustfrei zur Anwendung zu bringen.

In Tierställen kann die Emission von Ammoniak aus Dung und tierischen Exkrementen durch Zusatz eines Ureaseinhibitors auf effektive Weise eingeschränkt werden.

Aus der Sicht der verlustfreien und damit umweltentlastenden Lagerung und Ausbringung von organischen Düngern wie Mist oder Gülle ist der Einsatz von Ureaseinhibitoren, gegebenenfalls auch in Kombination mit Nitrifikationsinhibitoren, gleichfalls eine empfehlenswerte Maßnahme, um die Dünger- und damit Düngungseffizienz von Wirtschaftsdüngern zu erhöhen.

Es ist bekannt, dass speziell in der Tierfütterung von Wiederkäuern die Versorgung der Tiere mit proteinreicher und damit leistungsfördernder Nahrung teilweise ein finanzielles Problem für den Landwirt darstellt, in einigen Regionen der Erde jedoch auch aus klimatischen Gründen ein über das volle Jahr unlösbares Problem ist. Aus heutiger Sicht ist die Substitution pflanzlichen Eiweißes durch Tiermehl in der Wiederkäuerernährung gesundheitspolitisch nicht zu vertreten. Um dieser Situation gerecht zu werden, bietet sich eine teilweise Substitution der hochwertigen proteinreichen pflanzlichen Ernährung der Tiere durch sogenannte »non-protein-nitrogen-Verbindungen« (NPN-Verbindungen) an. Diese Rolle kann der Harnstoff übernehmen, wenn es gelingt, die im Pansen der Tiere ablaufende ureasekatalysierte Harnstoff-Hydrolyse so zu kontrollieren, dass die freigesetzten Ammoniakraten durch anwesende Mikroorganismen sofort zu mikrobiellem Protein verarbeitet werden und demzufolge keine toxischen Effekte auslösen können. Hier bietet sich gleichfalls der Einsatz geeigneter Ureaseinhibitoren an.

Aus der Literatur ist bekannt, dass bestimmte organische, aber auch anorganische Verbindungen die ureasekatalysierte Harnstoff-Hydrolyse zu hemmen vermögen (vgl. S. Kiss, M. Simihäian, Improving Efficiency of Urea Fertilizers by Inhibition of Soil Urease Activity, Kluwer Academic Publishers (2002)).

Mit der Entdeckung der Phosphorsäureesterdiamide (DD 122 177) sind Verbindungen gefunden worden, die äußerst effektive Ureaseinhibitoren darstellen. Ähnlich wirksam ist eine Reihe von Derivaten des Phosphorsäuretriamids einschließlich des Grundkörpers (vgl. bspw. US 4,540,428, US 4,676,822, US 4,696,693, US 4,537,614, US 4,517,004, EP 0 119 487), von denen das N-(n-Butyl)thiophosphorsäuretriamid (NBTPT) als einziger Vertreter bisher kommerzialisiert wurde (IMC AGRICO Corp., Produktbezeichnung Agrotain®).

Bei genauer Prüfung dieser Substanzen zeigt es sich, dass einige relativ hydrolyseanfällig sind, wodurch vor allem ihre Wirkungsdauer und somit ihre Anwendbarkeit erheblich eingeschränkt ist. Zum anderen sind sie teilweise nur in geringer Ausbeute oder mittels aufwendiger Herstellungsverfahren erhältlich, so dass eine vertretbare Ökonomie nicht gegeben ist. Aufgrund der Hydrolyseanfälligkeit des NBTPT und dessen Instabilität in Kombination mit harnstoffbasierten Düngemitteln kommt dieser Wirkstoff als Flüssigformulierung zum Einsatz, wobei die Formulierung unmittelbar vor der Düngerapplikation mit dem harnstoffbasierten Düngemittel gemischt wird, was äußerst unökonomisch ist. Eine gleichmäßige Wirkstoffverteilung auf den Düngergranalien kann so kaum gewährleistet werden. Darüber hinaus versagt NBTPT unter anaeroben Bedingungen im Reisanbau, also gerade dort, wo die höchsten Stickstoffverluste und Ammoniakemissionen zu verzeichnen sind, da die Bildung des Sauerstoffanalogons des NBTPT und damit des eigentlichen Ureaseinhibitors nicht oder nur langsam möglich ist (vgl. Fertilizer Research 42, 251 (1995)). verarbeitet werden und demzufolge keine toxischen Effekte auslösen können. Hier bietet sich gleichfalls der Einsatz geeigneter Ureaseinhibitoren an.

Aus der Literatur ist bekannt, dass bestimmte organische, aber auch anorganische Verbindungen die ureasekatalysierte Harnstoff-Hydrolyse zu hemmen vermögen (vgl. S. Kiss, M. Simihäian, Improving Efficiency of Urea Fertilizers by Inhibition of Soil Urease Activity, Kluwer Academic Publishers (2002)).

Mit der Entdeckung der Phosphorsäureesterdiamide (DD 122 177) sind Verbindungen gefunden worden, die äußerst effektive Ureaseinhibitoren darstellen. Ähnlich wirksam ist eine Reihe von Derivaten des Phosphorsäuretriamids einschließlich des Grundkörpers (vgl. bspw. US 4,540,428, US 4,676,822, US 4,696,693, US 4,537,614, US 4,517,004, EP 0 119 487), von denen das N-(n-Butyl)thiophosphorsäuretriamid (NBTPT) als einziger Vertreter bisher kommerzialisiert wurde (IMC AGRICO Corp., Produktbezeichnung Agrotain®).

In der DE 102 52 382 A1 werden 1,3,4-Oxa- und 1,3,4-Thiadiazol-2-yl (thio)phosphorsäuretriamide als Ureaseinhibitoren beschrieben. In der WO 02/083697 A werden Heterozyklisch-substituierte (Thio)phosphorsäuretriamide als Ureaseinhibitoren beschrieben. In der WO 01/87898 A werden N-(2-Pyrimidinyl) (Thio)phosphorsäuretriamide als Ureaseinhibitoren beschrieben. In der WO 00/61522 A werden Diaminophosphorsäurederivate als Ureaseinhibitoren beschrieben. In der WO 00/58317 A werden (Thio)phosphorsäuretriamide als Ureaseinhibitoren beschrieben. In der US-A-4 670 038 werden Cyclotriphosphazatriene als Ureaseinhibitoren beschrieben.

Bei genauer Prüfung dieser Substanzen zeigt es sich, dass einige relativ hydrolyseanfällig sind, wodurch vor allem ihre Wirkungsdauer und somit ihre Anwendbarkeit erheblich eingeschränkt ist. Zum anderen sind sie teilweise nur in geringer Ausbeute oder mittels aufwendiger Herstellungsverfahren erhältlich, so dass eine vertretbare Ökonomie nicht gegeben ist. Aufgrund der Hydrolyseanfälligkeit des NBTPT und dessen Instabilität in Kombination mit harnstoffbasierten Düngemitteln kommt dieser Wirkstoff als Flüssigformulierung zum Einsatz, wobei die Formulierung unmittelbar vor der Düngerapplikation mit dem harnstoffbasierten Düngemittel gemischt wird, was äußerst unökonomisch ist. Eine gleichmäßige Wirkstoffverteilung auf den Düngergranalien kann so kaum gewährleistet werden. Darüber hinaus versagt NBTPT unter anaeroben Bedingungen im Reisanbau, also gerade dort, wo die höchsten Stickstoffverluste und Ammoniakemissionen zu verzeichnen sind, da die Bildung des Sauerstoffanalogons des NBTPT und damit des eigentlichen Ureaseinhibitors nicht oder nur langsam möglich ist (vgl. Fertilizer Research 42, 251 (1995)).

Fertil. Soils 36 129 (2002)). Dieser Befund spiegelt sich auch in den Erträgen wider, die teilweise auf dem Niveau der als Vergleich herangezogenen alleinigen Harnstoffdüngung lagen (NBTPT/Carbid: Biol. Fertil. Soils 22, 89, (1996)).

Der vorliegenden Erfindung lag daher die Aufgabe zugrunde, solche Ureaseinhibitoren für die Praxis zur Verfügung zu stellen, die bei der Anwendung mit Düngeharnstoff oder anderen harnstoffbasierten Düngern in der Lage sind, die enzymkatalysierte Harnstoff-Hydrolyse auf ein solches Maß zu beschränken, dass daraus resultierende Stickstoffverluste in Form von Ammoniak nahezu auszuschließen sind bzw. die Ammoniaklast in Tierställen durch spontane Zersetzung des Harnstoffs deutlich reduziert wird. Die neuen Ureaseinhibitoren sollen ohne Wirkungseinbußen mit Nitrifikationsinhibitoren kombinierbar sein, um eine weitere Verbesserung der N-Ausnutzung in harnstoffbasierten Düngemitteln zu erreichen.

Gleichermaßen sollen diese Ureaseinhibitoren die im Pansen von Wiederkäuern ablaufende Harnstoffspaltung bei Einsatz von Harnstoff im Rahmen der Tierfütterung so verlangsamen, dass die Tiere durch sonst erfolgende Ammoniak-Intoxikationen keine Schäden erleiden und andererseits den auf diese Weise angebotenen Stickstoff für die körpereigene Proteinbiosynthese verwerten können.

Diese Aufgaben werden erfindungsgemäß durch die Bereitstellung und Verwendung der 1,1,3,3,3-Pentaamino-1-oxo/thio-1λ⁵,3λ⁵-diphosphaz-2-ene mit der in Anspruch 1 bzw. 2 definierten Struktur gelöst.

Es hat sich nämlich überraschenderweise gezeigt, dass die erfindungsgemäß bereitgestellten und eingesetzten 1,1,3,3,3-Pentaamino-1-oxo/thio-1λ⁵,3λ⁵-diphosphaz-2-ene äußerst effektive Ureaseinhibitoren mit einer ausreichenden Hydrolysebeständigkeit darstellen und außerdem technisch problemlos und kostengünstig aus einfachen Ausgangsstoffen herstellbar sind. Die erfindungsgemäßen 1,1,3,3,3-Pentaamino-1-oxo/thio-1λ⁵,3λ⁵-diphosphaz-2-ene sind außerdem mit gebräuchlichen Verfahren leicht in Harnstoff oder harnstoffbasierte Düngemitteln einarbeitbar, womit eine effiziente Ausbringung zusammen mit dem Düngemittel bzw. Verfütterung an Wiederkäuer möglich ist. Sie sind sowohl ausreichend wasserlöslich als auch gut öllöslich, was ebenfalls nicht vorhersehbar war. Ein weiterer Vorteil der erfindungsgemäßen 1,1,3,3,3-Pentaamino-1-oxo/thio-1λ⁵,3λ⁵-diphosphaz-2-ene ist deren problemlose Kombinierbarkeit mit Nitrifikationsinhibitoren.

Die Erfindung betrifft ferner Verfahren zur Herstellung der erfindungsgemäßen 1,1,3,3,3-Pentaamino-1-oxo/thio-1λ⁵,3λ⁵-diphosphaz-2-ene wie in Anspruch 3 definiert, Zusammensetzungen, die diese 1,1,3,3,3-Pentaamino-1-oxo/thio-1λ⁵,3λ⁵-diphosphaz-2-ene enthalten, wie in Anspruch 4 definiert, eine Düngemittelzusammensetzung wie in Anspruch 7 definiert sowie die in den Ansprüchen 2 sowie 10 bis 14 definierten Verwendungen.

Weitere vorteilhafte und/oder bevorzugte Ausführungsformen der Erfindung sind Gegenstand der Unteransprüche.

Die erfindungsgemäßen 1,1,3,3,3-Pentaamino-1-oxo/thio-1λ⁵,3λ⁵-diphosphaz-2-ene als Ureaseinhibitoren besitzen die allgemeine Formel (I): 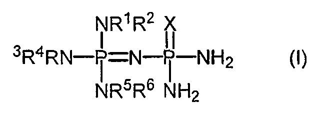 in der bedeuten:
X = Sauerstoff oder Schwefel
R¹, R², R³, R⁴, R⁵, R⁶ = unabhängig voneinander Wasserstoff, C₁-C₈-Alkyl/Heteroalkyl, C₂-C₈-Alkenyl/Heteroalkenyl, C₂-C₈-Alkinyl/Heteroalkinyl, C₃-C₈-Cycloalkyl/Heterocycloalkyl, C₃-C₈-Cycloalkenyl/Heterocycloalkenyl, C₆-C₁₀-Aryl/C₅-C₁₀-Heteroaryl, Aralkyl, Heteroarylalkyl, Alkaryl, Alkheteroaryl, wobei mindestens ein Rest R ungleich Wasserstoff ist und die Reste R¹-R⁶ gegebenenfalls selber und unabhängig voneinander mit einer oder mehreren der oben genannten Gruppen sowie durch Alkoxy, Aryloxy, Hetaryloxy, Alkylthio, Arylthio, Hetarylthio, Acyl, Aroyl, Hetaroyl, Acyloxy, Aroyloxy, Hetaroyloxy, Alkoxycarbonyl, Aryloxycarbonyl, Hetaryloxycarbonyl, Amino, Alkylamino, Dialkylamino, Alkylsulfonyl, Arylsulfonyl, Fluor, Chlor, Brom, Iod, Hydroxy, Cyano, Nitro, Sulfo, Carbonyl, Carboxy, Carbamoyl, Sulfamoyl substituiert sein können,
NR¹R² und/oder NR³R⁴ und/oder NR⁵R⁶ für ein 3-6-gliedriges, stickstoffhaltiges, ggf. aromatisches Ringsystem stehen können, welches ggf. weitere Heteroatome, wie Sauerstoff, Stickstoff oder Schwefel, enthalten und durch oben genannte Gruppen substituiert sein kann, und zwei Reste R verschiedener Aminogruppen (z.B. R¹ und R²) zusammen eine Alkylen- bzw. Alkenylen-Kette unter Bildung eines 5-8-gliedrigen Ringsystems formen können, welches ggf. ein oder mehrere Heteroatome, wie Sauerstoff, Stickstoff oder Schwefel, enthalten und durch oben genannte Gruppen substituiert sein kann,
sowie Salze, Tautomere und Metallkomplexe von Verbindungen der allgemeinen Formel (I), die ureaseinhibierende Wirkung haben.
Selbstverständlich wird der Fachmann die in der allgemeinen Formel (I) angegebenen Reste bzw. Gruppen so auswählen, dass keine unmöglichen Moleküle entstehen, z.B. chemisch oder sterisch unmögliche.

Die im folgenden erwähnten Alkyl-, Alkenyl- oder Alkinyl-Gruppen mit der entsprechenden Kohlenstoffanzahl können geradkettig oder verzweigt und einfach oder mehrfach ungesättigt sein.

Im folgenden wird zwar zur Vermeidung unnötiger Redundanz auch gelegentlich der Einfachheit halber nur der Begriff »Alkyl-Gruppe«, »Heteroalkyl-Gruppe« oder »Cycloalkyl-Gruppe« etc. verwendet, jedoch sollen jeweils die entsprechenden ungesättigten Gruppen umfaßt sein. Dem Fachmann ist klar, daß Alkenyl- oder Alkinyl-Gruppen mindestens 2 Kohlenstoffatome und cyclische KohlenwasserstoffGruppen mindestens 3 Kohlenstoffatome aufweisen müssen.

Der Begriff »Alkyl« bezieht sich, und zwar in jeder Kombination mit beliebigen anderen Gruppen, insbesondere auf eine Alkyl-Gruppe, die 1 bis 8 Kohlenstoffatome aufweist, z.B. eine Methyl-, Ethyl-, n-Propyl-, Isopropyl-, n-Butyl-, Isobutyl-, tert-Butyl, Amyl, Isoamyl, n-Hexyl-, 2,2-Dimethylbutyl- oder n-Octyl-Gruppe.

Der Begriff »Alkenyl« bezieht sich, und zwar in jeder Kombination mit beliebigen anderen Gruppen, insbesondere auf eine Alkenyl-Gruppe, die 2 bis 8 Kohlenstoffatome aufweist, z.B. eine Ethenyl-, n-Propenyl-, Isopropenyl-, n-Butenyl-, Isobutenyl-, tert-Butenyl, n-Hexenyl-, 2,2-Dimethylbutenyl-, n-Octenyl-, Allyl-, Isoprenyl- oder Hex-2-enyl-Gruppe.

Der Begriff »Alkinyl« bezieht sich, und zwar in jeder Kombination mit beliebigen anderen Gruppen, insbesondere auf eine Alkinyl-Gruppe, die 2 bis 8 Kohlenstoffatome aufweist, z.B. eine Ethinyl-, n-Propinyl-, Isopropinyl-, n-Butinyl-, Isobutinyl-, tert-Butinyl, n-Hexinyl-, 2,2-Dimethylbutinyl- oder n-Octinyl-Gruppe.

Der Begriff »Heteroalkyl« bezieht sich bzgl. des Alkylteils auf eine oben definierte Alkyl-Gruppe, soll aber auch eine entsprechende Heteroalkenyl- oder Heteroalkinyl-Gruppe umfassen, in der ein oder mehrere Kohlenstoffatome durch mindestens ein Sauerstoff-, Stickstoff-, Phosphor- oder Schwefelatom ersetzt sind.

Es ist klar, daß sämtliche der oben definierten Gruppen mit sich selbst oder anderen der oben definierten Gruppen substituiert sein können, sofern die ureaseinhibierende Wirkung erhalten bleibt.

Der Begriff »Aryl« bezieht sich auf eine aromatische cyclische Gruppe, die einen oder mehrere Ringe aufweist, und durch ein Gerüst gebildet wird, das 6 bis 10 Ringkohlenstoffatome enthält. Selbstverständlich kann im Falle von mehreren Ringen einer oder auch mehrere Ringe ganz oder teilweise hydriert sein (ein Beispiel dafür ist die 1,2,3,4,-Tetrahydro-naphthalen-1-yl-Gruppe). Außerdem kann eine Aryl-Gruppe durch Alkyl- oder Heteroalkyl-Gruppen (jeweils wie oben definiert) substituiert sein. Beispiele sind eine Phenyl-, Naphthyl-, Inden-, 2-, 3- oder 4-Methoxyphenyl-, 2-, 3- oder 4-Ethoxyphenyl-, 4-Carboxyphenylalkyl- oder 4-Hydroxyphenyl-Gruppe.

Die Begriffe »Aralkyl« bzw. »Heteroarylalkyl« beziehen sich auf Gruppen, die entsprechend den obigen bzw. folgenden Definitionen sowohl Aryl- bzw. Heteroaryl-(weiter unten definiert) wie auch Alkyl- und/oder Heteroalkyl- (auch die entsprechenden Alkylen/Heteroalkylen- und Alkinyl/Heteroalkinyl-Gruppen) und/oder carbocyclische Gruppen (weiter unten definiert) und/oder Heterocycloalkyl-Ringsysteme (weiter unten definiert) umfassen, z.B. eine Tetrahydroisochinolinyl-, Benzyl-, 2- oder 3-Ethylindolyl- oder 4-Methylpyridino-Gruppe.

Die Begriffe »Aralkyl« bzw. »Heteroarylalkyl« sollen, zur Vermeidung unnötiger Redundanz, auch die Begriffe »Alkaryl« bzw. »Alkheteroaryl« umfassen.

Der Begriff »Cycloalkyl« bzw. »carbocyclisch« bezieht sich auf eine gesättigte oder teilweise ungesättigte, cyclische, ggf. verzweigte, Gruppe, die einen oder mehrere Ringe aufweist, die ein Gerüst bilden, welches 3 bis 8 Kohlenstoffatome enthält, z.B. eine Cyclopropyl-, Cyclobutyl-, Cyclopentyl-, Cyclohexyl-, Tetralin-, Cyclopentenyl- oder Cyclohex-2-enyl-Gruppe.

Der Begriff »Heterocycloalkyl« bezieht sich auf die oben definierten Cycloalkyl- bzw. carbocylischen Gruppen, bei denen ein oder mehrere Kohlenstoffatome durch ein oder mehrere Sauerstoff-, Stickstoff-, Phosphor- oder Schwefelatome ersetzt sind. Konkrete Beispiele sind Aziridin-, Furan-, Pyrrolidin-, Piperidin-, Morpholin-, Oxazolidin-, Thiazolidin-, N-Methylpiperazino oder N-Phenylpiperazin-Gruppen.

Der Begriff »Heteroaryl« bezieht sich auf eine Aryl-Gruppe mit 5 bis 10 Ringatomen, in der ein oder mehrere Kohlenstoffatome durch ein Sauerstoff-, Stickstoff-, Phosphor- oder Schwefelatom ersetzt sind. Beispiele sind Pyrrol-, Furan-, Thiophen-, Pyrazol-, Isoxazol-, Isothiazol-, Imidazol-, Oxazol-, Thiazol-, 1,2,4-Triazol-, 1,2,4-Oxadiazol-, 1,2,4-Thiadiazol-, 1,3,4-Oxadiazol-, 1,3,4-Thiadiazol-, 1,2,5-Oxadiazol-, 1,2,5-Thiadiazol, Tetrazol, Pyridin-, Pyridazin-, Pyrimidin-, Pyrazin-, 1,2,3-Triazin-, 1,2,4-Triazin-, 1,3,5-Triazin- und Indol-Gruppen.

Es sei nochmal darauf hingewiesen, daß sämtliche der oben definierten Gruppen sowohl mit sich selbst als auch mit anderen der oben definierten Gruppen substituiert sein können, sofern die ureaseinhibierende Wirkung erhalten bleibt.

Die erfindungsgemäßen Verbindungen I sind durch analoge Anwendung bekannter Verfahren zugänglich (Phosphorus, Sulfur, and Silicon 56, 157 (1991); Inorg. Chim. Acta 33, 245 (1979); Isv. Akad. Nauk SSSR 5, 1117 (1981)), wobei X, R¹-R⁶ die oben beschriebene Bedeutung besitzen. Vorzugsweise erfolgt die Herstellung der Pentaamino-1-oxo/thio-1,3-diphosphazene in der Weise, dass man
a) 1, 1,3,3,3-Pentachlor-1 -oxo/thio-1λ⁵,3λ⁵-diphosphaz-2-en (A) mit einem oder mit bis zu 3 verschiedenen Aminen in einem inerten organischen Lösemittel, gegebenenfalls in Anwesenheit einer tertiären Base und gegebenenfalls unter Schutzgasatmosphäre bei - 50 bis 100 °C entsprechend Gleichung (1) zu Verbindungen des Typs (B) reagieren lässt: 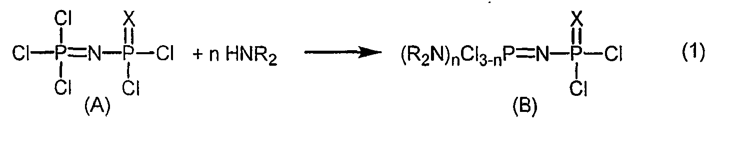 und anschließend
b) die in Stufe a) gebildeten Verbindungen des Typs (B) mit Ammoniak, gegebenenfalls in einem inerten organischen Lösemittel, bei Temperaturen von -80 bis 20 °C entsprechend Gleichung (2) zum gewünschten Endprodukt reagieren lässt: 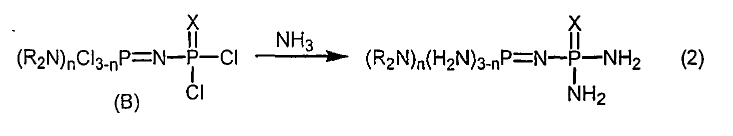
Schwefelhaltige Verbindungen (X = S) erhält man auch durch Schwefelung der entsprechenden Oxoverbindungen (X = O) mit Phosphorpentasulfid oder anderen Schwefelungsreagenzien (Umwandlung der O=P-Bindung in eine S=P-Bindung).

Die erfindungsgemäßen 1,1,3,3,3-Pentaamino-1-oxo/thio-1λ⁵,3λ⁵-diphosphaz-2-ene oder diese enthaltende Zusammensetzungen weisen eine für praktische Belange ausreichend anhaltende Inhibitionswirkung auf, wodurch sie die enzymatische Harnstoff-Hydrolyse so verlangsamen oder vorübergehend ausschalten können, dass Ammoniakverluste im Rahmen von Düngungsmaßnahmen unter Verwendung organischer und/oder mineralischer harnstoffhaltiger Stickstoffdünger auf ein Minimum reduziert werden bzw. das Auftreten schädlicher oder lästiger Ammoniakkonzentrationen in der Tierhaltung ausgeschlossen wird, beispielsweise durch Harnstoffabbau in tierischen Exkrementen oder durch den Abbau von Futterharnstoff im Pansen im Rahmen der Wiederkäuerernährung.

Dabei ist es unerheblich, ob sich die Wirkung der erfindungsgemäßen 1,1,3,3,3-Pentaamino-1-oxo/thio-1λ⁵,3λ⁵-diphosphaz-2-ene oder diese enthaltenden Zusammensetzungen auf Düngungsmaßnahmen oder auf vorbeugende Maßnahmen zur Vermeidung hoher Ammoniakkonzentrationen in Tierställen erstreckt oder aber für den Einsatz von Futterharnstoff im Rahmen der Wiederkäuerernährung genutzt wird.

Die erfindungsgemäßen Verbindungen werden vorzugsweise gemeinsam mit harnstoffbasierten Düngemitteln, vorzugsweise in einer Menge von 0,01 bis 10 Gew.-%, bezogen auf das Gewicht des harnstoffbasierten Düngemittels, ausgebracht oder dem Futterharnstoff bzw. den in Tierställen anfallenden tierischen Ausscheidungen zugesetzt. Dabei ist es beispielsweise im Rahmen von Düngungsmaßnahmen unwesentlich, ob sie oberflächig vorher auf den Dünger aufgebracht, darin inkorporiert oder gemeinsam oder in vertretbarem Zeitraum getrennt von harnstoffhaltigen Düngemitteln ausgebracht werden.

Ein weiterer Gegenstand der Erfindung sind somit Zusammensetzungen, die die erfindungsgemäß eingesetzten 1,1,3,3,3-Pentaamino-1-oxo/thio-1λ⁵,3λ⁵-diphosphaz-2-ene und ein harnstoffbasiertes mineralisches und/oder organisches Düngemittel enthalten.

Die erfindungsgemäß vorgeschlagenen Verbindungen können zur gleichzeitigen Verhinderung bzw. Einschränkung der ureasekatalysierten Harnstoff-Hydrolyse sowie der Nitrifikation auf die oben beschriebene Weise mit einer oder mehreren der folgenden Verbindungen, bei denen es sich um Nitrifikationsinhibitoren handelt, beispielsweise in einer Menge von 0,01 bis 10 Gew.-%, bezogen auf das Gewicht des harnstoffbasierten Düngemittels, kombiniert werden:
a) Pyrazol-Derivate der allgemeinen Formel (IV), oder Salze oder Komplexverbindungen davon: 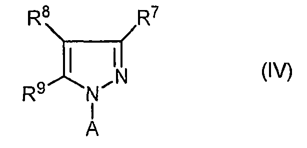 in der
   R⁷, R⁸, R⁹ unabhängig voneinander Wasserstoff, Halogen, C₁-C₈-Alkyl, oder C₃-C₈-Cycloalkyl
   und
   A den Rest H
   oder den Rest 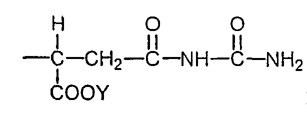 mit Y = H, Na, K, NH₄ oder den Rest
   -CH₂-B mit B = (Di)alkylamino, oder den Rest 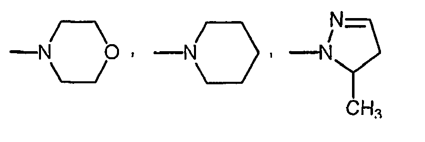 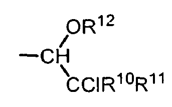 mit R¹⁰ R¹¹ = H oder CI und
   R¹² = H oder 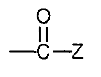 mit Z = C₁-C₈-Alkoxy, C₁-C₈-Alkylamino, C₆-C₁₀-Arylamino oder den Rest 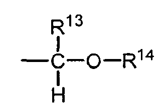 mit R¹³ , R¹⁴ = H, C₁-C₈-Alkyl, C₇-C₁₈-Alkylaryl, C₆-C₁₀-Aryl oder die Reste 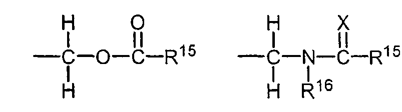 mit R¹⁵ = C₁-C₂₀-Alkyl, C₃-C₈-Cycloalkyl, C₆-C₁₀-Aryl oder Alkylaryl aus C₁-C₄-Alkyl- und C₆-C₁₀-Arylgruppen; mit X = Sauerstoff oder Schwefel sowie mit R¹⁶ = C₁-C₄-Alkyl, C₃-C₈-Cycloalkyl, C₆-C₁₀-Aryl oder H,
   bedeuten und die aufgeführten Alkyl- und Arylreste mit sich selber sowie durch C₁-C₄-Alkylsulfonyl, C₁-C₄-Alkoxy, C₁-C₄-Acyl, Halogen, Hydroxyl, Trimethylsilyl, Amino, Nitro, Cyano, Carbonyl, Carboxyl oder C₁-C₅-Carboxyalkyl substituiert sein können,
b) 1H-1,2,4-Triazole, oder deren Salze oder Komplexverbindungen,
c) Dicyandiamid.

Zur Verwendung als Ureaseinhibitoren, beispielsweise zur Senkung der Stickstoffverluste bei der Düngung mit Düngeharnstoff oder harnstoffbasierten Düngern oder zur Verminderung der Ammoniakbelastung aus dem Dung bzw. den tierischen Exkrementen in Tierställen oder zur Vermeidung toxischer Effekte beim Einsatz von Futterharnstoff können die erfindungsgemäß geeigneten Verbindungen auf verschiedene Art und Weise ausgebracht bzw. aufgebracht werden.

Die erfindungsgemäßen Verbindungen können in den Harnstoff oder in harnstoffhaltige Düngemittel vor oder während der Granulation aus der schmelzflüssigen Phase eingearbeitet werden. Weiterhin können sie auf die Oberfläche der Harnstoff- bzw. Düngemittelgranalien aufgebracht oder flüssigen harnstoffhaltigen Düngemitteln zugesetzt werden. Schließlich ist die Zugabe der Ureaseinhibitoren zu organischen harnstoffhaltigen Düngern wie Dung oder Gülle möglich. Die erfindungsgemäßen Verbindungen können dabei in reiner Form als pulverfömiger Stoff, Granulat oder Schmelze oder als spezielle Formulierung, versetzt mit den üblichen und dem Fachmann bekannten Hilfs-, Träger- und Streckstoffen oder einer Kombination dieser Mittel, eingesetzt werden. Dabei ist es unerheblich, ob der wirksame Inhaltsstoff in flüssiger Form als z. B. Lösung, Emulsion oder Supension oder in fester Form als stäub- oder dispergierbares Pulver formuliert wird. Benetzbare Pulver, emulgierbare Konzentrate und Suspensionskonzentrate enthalten gewöhnlich, aber nicht notwendigerweise, oberflächenaktive Mittel, z. B. ein Benetzungs-, Dispersions-, Emulgierungs oder Suspensionsmittel. Die jeweiligen Formulierungsverfahren entsprechen dem Stand der Technik und sind dem Fachmann bekannt.

Die erfindungsgemäßen Verbindungen, Zusammensetzungen und Düngemittel können beispielsweise bei der sowie zur Fertigation verwendet werden. Unter Fertigation versteht man die gezielte Zufuhr an Nährstoffen mit dem Bewässerungswasser, das z.B. durch Tropfbewässerung, Besprühen oder Berieseln ausgebracht werden kann. Die Pflanzen erhalten nur die zum optimalen Wachstum erforderliche Menge an Wasser, so dass kein Überschußwasser entsteht. Mangels einer vertikalen Wasserbewegung im Boden unterhalb der Durchwurzelungszone treten Nährstoffauswaschungsverluste praktisch nicht auf. Die Tropfbewässerung, Besprühung oder Berieselung mit Ureaeinhibitoren kann beispielsweise nach der Düngung erfolgen oder auch gemeinsam mit der Düngung. Natürlich besteht keine Beschränkung auf wässrige Lösungen oder sonstige Formulierungen. Beipielsweise können auch versprühbare Suspensionen feiner Teilchen verwendet werden. Insofern sei beispielhaft auf EP 1 378 499 und WO2004/013253 verwiesen.

Die vorliegende Erfindung soll nun anhand der folgenden Beispiele ohne Beschränkung und somit lediglich zur Veranschaulichung erläutert werden.

### Beispiele

### BEISPIEL 1

3,3-Bis(butylamino)-1,1,3,-triamino-1-thio-1λ⁵,3λ⁵-diphosphaz-2-en Zu einer Lösung von 25 g (87,6 mmol) 1,1,3,3,3-Pentachlor-1-thio-1λ⁵,3λ⁵-diphosphaz-2-en (Cl₃P=N-PSCl₂) in 300 ml Diethylether wird unter Rühren bei -20 bis 0 °C eine Lösung aus 12,82 g (175 mmol) n-Butylamin und 17,74 g (175 mmol) Triethylamin in 300 ml Diethylether innerhalb von 3 h zugetropft. Man lässt 2 h nachrühren und saugt das ausgefallene Triethylammoniumchlorid ab, wäscht mit Diethylether und destilliert das Lösungsmittel ab. Das zurückbleibende Öl wird ohne weitere Reinigung in 150 ml Chloroform aufgenommen und bei -50 bis -30 °C unter Rühren zu einer Lösung von ca. 50 ml flüssigem Ammoniak in 150 ml Chloroform getropft. Anschließend lässt man über Nacht bei Raumtemperatur das überschüssige Ammoniak abdampfen. Die Lösung wird vom Feststoff abgetrennt und im Vakuum das Lösungsmittel entfernt. Der Rückstand wird mit 150 ml Diethylether verrührt. Man saugt den ungelösten Feststoff ab, wäscht mit Diethylether und trocknet. Man erhält 16,6 g (63 %) Diphosphazen.
Schmelzpunkt: 86 - 87 °C
¹H-NMR (DMSO-d₆): δ [ppm] = 0,87 (t, 6 H, CH₃); 1,30 (m, 4 H, CH₂); 1,4 (m, 4 H, CH₂); 2,76 (m, 4 H, CH₂); 3,89 (s, NH₂); 3,95 (s, NH₂); 4,07 (m, 2 H, NH) ¹³C-NMR (DMSO-d₆): δ [ppm] = 13,8 (CH₃); 19,6 (CH₂); 33,3 (d, CH₂); 40,0 (CH₂) ³¹P-NMR (DMSO-d₆): δ [ppm] = 13,2 (m, 1 P); 45,6 (d, 1 P, P=S)

### Beispiel 2

3,3-Bis(butylamino)-1,1,3,-triamino-1-oxo-1λ⁵,3λ⁵-diphosphaz-2-en Analog zu der in Beispiel 1 beschriebenen Verfahrensweise erhält man ausgehend von 5 g (18,6 mmol) 1,1,3,3,3-Pentachlor-1-oxo-1λ⁵,3λ⁵-diphosphaz-2-en (Cl₃P=N-POCl₂), 2,72 g (37,2 mmol) n-Butylamin und 3,76 g (37,2 mmol) Triethylamin nach Ammonolyse 3,6 g (68 %) Diphosphazen.
Schmelzpunkt: - (Öl)
¹H-NMR (CDCl₃): δ [ppm] = 0,86 (t, 6 H, CH₃); 1,29 (m, 4 H, CH₂); 1,44 (m, 4 H, CH₂); 2,82 (m, 4 H, CH₂); 3,6 (NH₂); 3,93 (2 H, NH)
¹³C-NMR (CDCl₃): δ [ppm] = 13,6 (CH₃); 19,9 (CH₂); 33,7 (d, CH₂); 40,4 (CH₂) ³¹P-NMR (CDCl₃): δ [ppm] = 8,7 (d, 1 P, P=O); 12,6 (m, 1 P)

### Beispiel 3

3,3-Bis(propylamino)-1,1,3,-triamino-1-thio-1λ⁵,3λ⁵-diphosphaz-2-en Analog zu der in Beispiel 1 beschriebenen Verfahrensweise erhält man ausgehend von 25 g (87,6 mmol) 1,1,3,3,3-Pentachlor-1-thio-1λ⁵,3λ⁵-diphosphaz-2-en (Cl₃P=N-PSCl₂), 2,72 g (175 mmol) n-Propylamin und 17,74 g (175 mmol) Triethylamin nach Ammonolyse 13,4 g (56 %) Diphosphazen.
Schmelzpunkt: 105 - 107°C
¹H-NMR (DMSO-d₆): δ [ppm] = 0,86 (t, 6 H, CH₃); 1,42 (m, 4 H, CH₂); 2,72 (m, 4 H, CH₂); 3,89 (s, NH₂); 3,95 (s, NH₂); 4,10 (m, 2 H, NH)
¹³C-NMR (CDCl₃): δ [ppm] = 11,2 (CH₃); 24,6 (d, CH₂); 42,7 (CH₂)
³¹P-NMR (DMSO-d₆): δ [ppm] = 13,2 (m, 1 P); 45,5 (d, 1 P, P=S)

### Beispiel 4

3,3-Bis(propylamino)-1,1,3,-triamino-1-oxo-1λ⁵,3λ⁵-diphosphaz-2-en Analog zu der in Beispiel 1 beschriebenen Verfahrensweise erhält man ausgehend von 5 g (18,6 mmol) 1,1,3,3,3-Pentachlor-1-oxo-1λ⁵,3λ⁵-diphosphaz-2-en (Cl₃P=N-POCl₂), 2,20 g (37,2 mmol) n-Propylamin und 3,76 g (37,2 mmol) Triethylamin nach Ammonolyse 3,0 g (63 %) Diphosphazen.
Schmelzpunkt: - (Öl)
¹H-NMR (CDCl₃): δ [ppm] = 0,90 (t, 6 H, CH₃); 1,52 (m, 4 H, CH₂); 2,83 (m, 4 H, CH₂); 3,68 (NH₂); 3,9 (NH)
¹³C-NMR (CDCl₃): δ [ppm] = 11,3 (CH₃); 24,7 (d, CH₂); 42,5 (CH₂)
³¹P-NMR (CDCl₃): δ [ppm] = 8,5 (d, 1 P, P=O); 12,8 (m, 1 P)

### Beispiel 5

3-Butylamino-1,1,3,3-tetraamino-1-thio-1λ⁵,3λ⁵-diphosphaz-2-en Zu einer Lösung von 9,5 g (33,3 mmol) 1,1,3,3,3-Pentachlor-1-thio-1λ⁵,3λ⁵-diphosphaz-2-en (Cl₃P=N-PSCl₂) in 100 ml Diethylether wird unter Rühren bei -20 bis 0 °C eine Lösung aus 4,87 g (66,6 mmol) n-Butylamin in 50 ml Diethylether innerhalb von 1 h zugetropft. Man lässt 2 h nachrühren, saugt das ausgefallene Butylammoniumchlorid ab und wäscht mit Diethylether. Nach Entfernen des Lösungsmittels wird das zurückbleibende Öl im Vakuum destilliert (Kp 158 °C bei 0,2 mbar). Man erhält 7,6 g 3-Butylamino-1,1,3,3-tetrachlor-1-thio-1λ⁵,3λ⁵-diphosphaz-2-en, welches in 50 ml Chloroform gelöst und bei -50 bis -30 °C unter Rühren zu einer Lösung von ca. 50 ml flüssigem Ammoniak in 50 ml Chloroform getropft wird. Anschließend lässt man über Nacht bei Raumtemperatur das überschüssige Ammoniak abdampfen. Das Rohprodukt wird abgesaugt und mit Ethanol gewaschen. Zur Abtrennung des Ammoniumchlorids wird das Rohprodukt in 100 ml Chloroform suspendiert und 3 h mit 13 g Diethylamin unter Rückfluss gerührt. Nach Abkühlen wird abgesaugt, mit Chloroform gewaschen und getrocknet. Man erhält 4,5 g (55 %) Diphosphazen.
Schmelzpunkt: 113 - 116 °C
¹H-NMR (DMSO-d₆): δ [ppm] = 0,88 (t, 3 H, CH₃); 1,30 (m, 4 H, CH₂); 1,40 (m, 4 H, CH₂); 2,78 (m, 4 H, CH₂); 3,26 (NH₂, 4 H); 3,88 (4 H, NH); 4,06 (m, 1 H) ¹³C-NMR (DMSO-d₆): δ [ppm] = 13,8 (CH₃); 19,6 (CH₂); 33,3 (d, CH₂); 40,2 (CH₂) ³¹P-NMR (DMSO-d₆): δ [ppm] = 13,7 (m, 1 P); 45,6 (d, 1 P, P=S)

### Beispiel 6

3-Propylamino-1,1,3,3-tetraamino-1-thio-1λ⁵,3λ⁵-diphosphaz-2-en Analog zu der in Beispiel 5 beschriebenen Verfahrensweise erhält man aus 8,6 g (30,1 mmol) 1,1,3,3,3-Pentachlor-1-thio-1λ⁵,3λ⁵-diphosphaz-2-en (Cl₃P=N-PSCl₂) und 3,6 g (60,9 mmol) n-Propylamin nach Destillation (Kp = 138 - 146 °C bei 0,1 mbar) 5,5 g 3-Propylamino-1,1,3,3-tetrachlor-1-thio-1λ⁵,3λ⁵-diphosphaz-2-en, welches mit Ammoniak zum Zielprodukt umgesetzt wird. Die Aufarbeitung analog zu Beispiel 5 ergibt 3,3 g (48 %) Diphosphazen.
Schmelzpunkt: 130 -131 °C
¹H-NMR (DMSO-d₆): δ [ppm] = 0,86 (t, 3 H, CH₃); 1,43 (m, 4 H, CH₂); 2,75 (m, 4 H, CH₂); 3,26 (NH₂, 4 H); 3,88 (4 H, NH); 4,08 (m, 1 H)
¹³C-NMR (DMSO-d₆): δ [ppm] = 11,5 (CH₃); 24,3 (d, CH₂); 42,4 (CH₂)
³¹P-NMR (DMSO-d₆): δ [ppm] = 13,7 (m, 1 P); 45,6 (d, 1 P, P=S)

### Beispiel 7

3-Diethylamino-1,1, 3,3-tetraamino-1-thio-1λ⁵,3λ⁵-diphosphaz-2-en Analog zu der in Beispiel 5 beschriebenen Verfahrensweise erhält man aus 8,2 g (28,7 mmol) 1,1,3,3,3-Pentachlor-1-thio-1λ⁵,3λ⁵-diphosphaz-2-en (Cl₃P=N-PSCl₂) und 4,20 g (57,5 mmol) Diethylamin nach Destillation (Kp = 125 °C bei 0,3 mbar) 5,9 g 3-Diethylamino-1,1,3,3-tetrachlor-1-thio-1λ⁵,3λ⁵-diphosphaz-2-en, welches in 30 ml Chloroform gelöst und bei -50 bis -30°C unter Rühren zu einer Lösung von ca. 40 ml flüssigem Ammoniak in 20 ml Chloroform getropft wird. Anschließend lässt man über Nacht bei Raumtemperatur das überschüssige Ammoniak abdampfen. Das Ammoniumchlorid wird abgesaugt und das Filtrat zur Trockne eingeengt. Das zurückbleibende Öl wird mehrmals mit Ether gewaschen und getrocknet. Man erhält 4,5 g (64 %) Diphosphazen.
Schmelzpunkt: - (Öl)
¹H-NMR (DMSO-d₆): δ [ppm] = 1,01 (t, 6 H, CH₃); 3,03 (m, 4 H, CH₂); 3,89 (s, NH₂); 3,35 (breit, NH₂); 3,97 (s, NH₂)
¹³C-NMR (DMSO-d₆): δ [ppm] = 14,3 (d, CH₃); 39,1 (CH₂)
³¹P-NMR (DMSO-d₆): δ [ppm] = 15,6 (m, 1 P); 45,5 (d, 1 P, P=S)

### BEISPIEL 8

### Prüfung auf ureasehemmende Wirkung

30 g auf 40 % der maximalen Wasserkapazität eingestellter Boden werden mit 1 ml Harnstofflösung entsprechend 50 mg Harnstoff versetzt. Gleichzeitig erfolgt die Applikation des Wirkstoffes, vorzugsweise in der Harnstofflösung gelöst. Die Konzentrationsangaben für die einzelnen geprüften Wirkstoffe in der nachfolgenden Tabelle beziehen sich auf die im Test verwendete Menge an Carbamidstickstoff. Der Boden, auf dessen Oberfläche die Harnstofflösung (mit und ohne Wirkstoff) aufgebracht wird, befindet sich in einem luftdicht verschlossenen Gefäß, in das gleichzeitig eine Vorlage eingebracht wird, die den aus dem Harnstoff freigesetzten Ammoniak als Ammonium auffängt. Durch tägliches Überspülen der Vorlage und Analyse der enthaltenen NH₄-N-Mengen wird die NH₃-N-Freisetzung aus dem Harnstoff bestimmt.

Aus der Summation der Ammonium-Mengen in der Vorlage wird die prozentuale Hemmung der Harnstoff-Hydrolyse in Abhängigkeit von der Zeit berechnet bzw. aus diesen Werten der t₅₀-Wert rechnerisch ermittelt.

Als t₅₀-Wert wird der Zeitpunkt in Tagen nach Versuchsbeginn verstanden, zu dem die Hemmung der Harnstoff-Hydrolyse noch 50 % beträgt.

Tabelle 1 gibt einen Überblick über die nach dieser Methode ermittelten Hemmdaten einiger ausgewählter erfindungsgemäßer Verbindungen.

Tabelle 1: Ureasehemmung (t₅₀-Wert) nach Tagen durch 1,1,3,3,3-Pentaamino-1-oxo/thio-1λ⁵,3λ⁵-diphosphaz-2-ene der allgemeinen Formel (I) mit R⁵, R⁶ = H

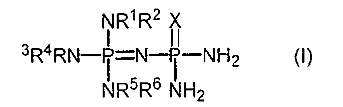

| Verbindung | | | | Konz.^{a)} | t₅₀-Wert |
|---|---|---|---|---|---|
| Nr. | X | NR¹R² | NR³R⁴ | % HS-N-bez. | (d) |
| 1 | S | NH-n-C₄H₉ | NH-n-C₄H_{9.} | 0,1 | 9,4 |
| 2 | O | NH-n-C₄H₉ | NH-n-C₄H₉ | 0,1 | 8,8 |
| 3 | S | NH-n-C₃H₇ | NH-n-C₃H₇ | 0,1 | 10,4 |
| 4 | O | NH-n-C₃H₉ | NH-n-C₃H₉ | 0,1 | 9,6 |
| 5 | S | NH-n-C₄H₉ | NH₂ | 0,1 | 14,5 |
| 6 | S | NH-n-C₃H₇ | NH₂ | 0,1 | 14,2 |
| 7 | S | N(C₂H₅)₂ | NH₂ | 0,5 | 7,9 |

| | | | | | |
|---|---|---|---|---|---|
| ^{a)} Konz. % HS-N-bez.: Konzentration in Prozent bezogen auf die verwendete Menge an Harnstoffstickstoff | | | | | |

## Patentansprüche

1. 1,1,3,3,3-Pentaamino-1-oxo/thio-1λ⁵,3λ⁵-diphosphaz-2-ene der allgemeinen Formel (I): 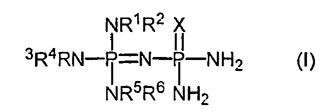 in der bedeuten:
X = Sauerstoff oder Schwefel
R¹, R², R³, R⁴, R⁵, R⁶ = unabhängig voneinander Wasserstoff, C₁-C₈-Alkyl/Heteroalkyl, C₂-C₈-Alkenyl/Heteroalkenyl, C₂-C₈-Alkinyl/Heteroalkinyl, C₃-C₈-Cycloalkyl/Heterocycloalkyl, C₃-C₈-Cycloalkenyl/Heterocycloalkenyl, C₆-C₁₀-Aryl/C₅-C₁₀-Heteroaryl, Aralkyl, Heteroarylalkyl, Alkaryl, Alkheteroaryl, wobei mindestens ein Rest R ungleich Wasserstoff ist und die Reste R¹-R⁶ gegebenenfalls selber und unabhängig voneinander mit einer oder mehreren der oben genannten Gruppen sowie durch Alkoxy, Aryloxy, Hetaryloxy, Alkylthio, Arylthio, Hetarylthio, Acyl, Aroyl, Hetaroyl, Acyloxy, Aroyloxy, Hetaroyloxy, Alkoxycarbonyl, Aryloxycarbonyl, Hetaryloxycarbonyl, Amino, Alkylamino, Dialkylamino, Alkylsulfonyl, Arylsulfonyl, Fluor, Chlor, Brom, lod, Hydroxy, Cyano, Nitro, Sulfo, Carbonyl, Carboxy, Carbamoyl, Sulfamoyl substituiert sein können,
NR'R² und/oder NR³R⁴ und/oder NR⁵R⁶ für ein 3-6-gliedriges, stickstoffhaltiges, ggf. aromatisches Ringsystem stehen können, welches ggf. weitere Heteroatome, wie Sauerstoff, Stickstoff oder Schwefel, enthalten und durch oben genannte Gruppen substituiert sein kann, und zwei Reste R verschiedener Aminogruppen zusammen eine Alkylen- bzw. Alkenylen-Kette unter Bildung eines 5-8-gliedrigen Ringsystems formen können, welches ggf. ein oder mehrere Heteroatome, wie Sauerstoff, Stickstoff oder Schwefel, enthalten und durch oben genannte Gruppen substituiert sein kann,
sowie Salze, Tautomere und Metallkomplexe von Verbindungen der allgemeinen Formel (I), die ureaseinhibierende Wirkung haben.

2. Verwendung der 1,1,3,3,3-Pentaamino-1-oxo/thio-1λ⁵,3λ⁵-diphosphaz-2-ene nach Anspruch 1 sowie der Verbindungen mit den Formeln (II) und (III): 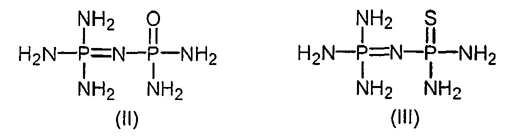 sowie deren Salze, Tautomere und Metallkomplexe, die ureaseinhibierende Wirkung haben, als Mittel zur Regulierung bzw. Hemmung der enzymatischen Harnstoff-Hydrolyse.

3. Verfahren zur Herstellung der 1,1,3,3,3-Pentaamino-1-oxo/thio-1λ⁵,3λ⁵-diphosphaz-2-ene nach Anspruch 1 oder 2, **dadurch gekennzeichnet, dass** man
a) 1,1,3,3,3-Pentachlor-1-oxo/thio-1λ⁵,3λ⁵-diphosphaz-2-en (A) mit einem oder mit bis zu 3 verschiedenen Aminen, gegebenenfalls in einem inerten organischen Lösemittel, gegebenenfalls in Anwesenheit einer tertiären Base und gegebenenfalls unter Schutzgasatmosphäre bei - 50 bis 100 °C entsprechend Gleichung (1) zu Verbindungen des Typs (B) reagieren lässt: 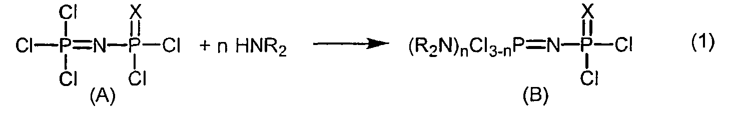 und anschließend
b) die in Stufe a) gebildeten Verbindungen des Typs (B) mit Ammoniak, gegebenenfalls in einem inerten organischen Lösemittel, bei Temperaturen von -80 bis 20 °C entsprechend Gleichung (2) zum gewünschten Endprodukt reagieren lässt:

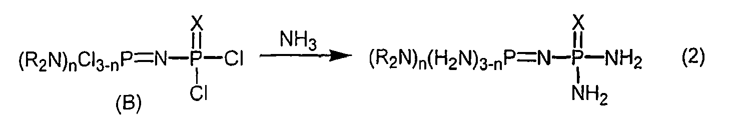

4. Zusammensetzung, **dadurch gekennzeichnet, dass** sie mindestens ein 1,1,3,3,3-Pentaamino-1-oxo/thio-1λ⁵,3λ⁵-diphosphaz-2-en nach Anspruch 1 oder 2 in einer zur Ureaseinhibition ausreichenden Menge sowie gegebenenfalls landwirtschaftlich und/oder physiologisch akzeptable bzw. verträgliche oder erwünschte Träger-, Streck- bzw. Verdünnungsmittel, Hilfsstoffe und gegebenenfalls weitere Wirkstoffe enthält.

5. Zusammensetzung nach Anspruch 4, **dadurch gekennzeichnet**, das als weiterer Wirkstoff mindestens ein Nitrifikationsinhibitor in einer zur Nitrifikationsinhibition wirksamen Menge enthalten ist.

6. Zusammensetzung nach Anspruch 5, **dadurch gekennzeichnet**, das der Nitrifikationsinhibitor unter einer oder mehreren der folgenden Verbindungen ausgewählt ist:
a) Pyrazol-Derivate der allgemeinen Formel (IV), oder Salze oder Komplexverbindungen davon: 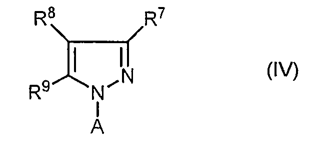 in der
R⁷, R⁸, R⁹ unabhängig voneinander Wasserstoff, Halogen, C₁-C₈-Alkyl, oder C₃-C₈-Cycloalkyl
und
A den Rest H
oder den Rest 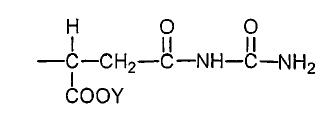 mit Y = H, Na, K, NH₄ oder den Rest
-CH₂-B mit B = (Di)alkylamino, 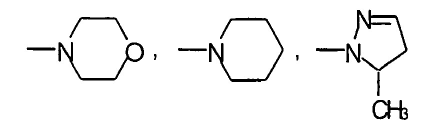 oder den Rest 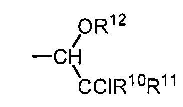 mit R¹⁰, R¹¹ = H oder Cl und
R¹² = H oder 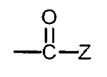 mit Z = C₁-C₈-Alkoxy, C₁-C₈-Alkylamino, C₆-C₁₀-Arylamino oder den Rest 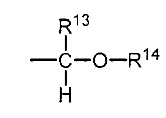 mit R¹³ , R¹⁴ = H, C₁-C₈-Alkyl, C₇-C₁₈-Alkylaryl, C₆-C₁₀-Aryl oder die Reste 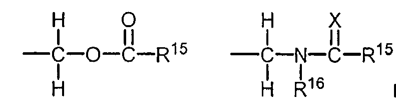 mit R¹⁵= C₁-C₂₀-Alkyl, C₃-C₈-Cycloalkyl, C₆-C₁₀-Aryl oder Alkylaryl aus C₁-C₄-Alkyl- und C₆-C₁₀-Arylgruppen; mit X = Sauerstoff oder Schwefel sowie mit R¹⁶ = C₁-C₄-Alkyl, C₃-C₈-Cycloalkyl, C₆-C₁₀-Aryl oder H,
bedeuten und die aufgeführten Alkyl- und Arylreste mit sich selber sowie durch C₁-C₄-Alkylsulfonyl, C₁-C₄-Alkoxy, C₁-C₄-Acyl, Halogen, Hydroxyl,
Trimethylsilyl, Amino, Nitro, Cyano, Carbonyl, Carboxyl oder C₁-C₅-Carboxyalkyl substituiert sein können,
b) 1H-1,2,4-Triazole, oder deren Salze oder Komplexverbindungen,
c) Dicyandiamid.

7. Düngemittelzusammensetzung, **dadurch gekennzeichnet, dass** sie mindestens ein harnstoffbasiertes mineralisches und/oder organisches Düngemittel sowie mindestens ein 1,1,3,3,3-Pentaamino-1-oxo/thio-1λ⁵,3λ⁵-diphosphaz-2-en nach Anspruch 1 oder 2 und/oder eine Zusammensetzung nach einem der Ansprüche 4 bis 6 oder mindestens ein 1,1,3,3,3-Pentaamino-1-oxo/thio-1λ⁵,3λ⁵-diphosphaz-2-en nach Anspruch 1 oder 2 und mindestens einen in Anspruch 6 definierten Nitrifikationsinhibitor jeweils in einer zur Ureaseinhibition bzw. Nitrifikationsinhibition ausreichenden Menge enthält.

8. Düngemittelzusammensetzung nach Anspruch 7, **dadurch gekennzeichnet, dass** mindestens ein 1,1,3,3,3-Pentaamino-1-oxo/thio-1λ⁵,3λ⁵-diphosphaz-2-en nach Anspruch 1 oder 2 in einer Menge von 0,01 bis 10 Gew.-%, bezogen auf das Gewicht des harnstoffbasierten Düngemittels, enthalten ist.

9. Düngemittelzusammensetzung nach Anspruch 7, **dadurch gekennzeichnet, dass** mindestens einer der in Anspruch 6 definierten Nitrifikationsinhibitoren in einer Menge von 0,01 bis 10 Gew.-%, bezogen auf das Gewicht des harnstoffbasierten Düngemittels, enthalten ist.

10. Verwendung der 1,1,3,3,3-Pentaamino-1-oxo/thio-1λ⁵,3λ⁵-diphosphaz-2-ene nach Anspruch 1 oder 2 oder der Zusammensetzungen nach einem der Ansprüche 4 bis 6 zur Regulierung bzw. Hemmung der ureasekatalysierten Harnstoffhydrolyse.

11. Verwendung der 1,1,3,3,3-Pentaamino-1-oxo/thio-1λ⁵,3λ⁵-diphosphaz-2-ene nach Anspruch 1 oder 2 oder der Zusammensetzungen nach einem der Ansprüche 4 bis 6 zur Senkung der Stickstoffverluste bei der Düngung mit Düngeharnstoff oder harnstoffbasierten Düngern.

12. Verwendung der 1,1,3,3,3-Pentaamino-1-oxo/thio-1λ⁵,3λ⁵-diphosphaz-2-ene nach Anspruch 1 oder 2 oder der Zusammensetzungen nach einem der Ansprüche 4 bis 6 zur Verminderung der Ammoniakbelastung aus dem Dung bzw. den tierischen Exkrementen in Tierställen.

13. Verwendung der 1,1,3,3,3-Pentaamino-1-oxo/thio-1λ⁵,3λ⁵-diphosphaz-2-ene nach Anspruch 1 oder 2 oder der Zusammensetzungen nach einem der Ansprüche 4 bis 6 zur Vermeidung toxischer Effekte bei der Verfütterung von Futterharnstoff im Rahmen der Tierernährung.

14. Verwendung der 1,1,3,3,3-Pentaamino-1-oxo/thio-1λ⁵,3λ⁵-diphosphaz-2-ene nach Anspruch 1 oder 2 oder der Zusammensetzungen nach einem der Ansprüche 4 bis 6 zur Fertigation.

## Claims

1. 1,1,3,3,3-pentaamino-1-oxo/thio-1λ⁵,3λ⁵-diphosphaz-2-enes with the general formula (I): 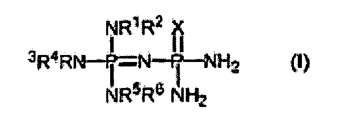 in which:
X = oxygen or sulphur
R¹, R², R³, R⁴, R⁵, R⁶ = independently of one another, hydrogen, C₁-C₈-alkyl-heteroalkyl, C₂-C₈-alkenyl/heteroalkenyl, C₂-C₈-alkinyl/heteroalkinyl, C₃-C₈-cycloalkyl/heterocycloalkyl, C₃-C₈-cycloalkenyl/heterocycloalkenyl, C₆-C₁₀-aryl/C₅-C₁₀-heteroaryl, aralkyl, heteroarylalkyl, alkaryl, alkheteroaryl, at least one moiety R being dissimilar to hydrogen, and the R¹-R⁶ moieties optionally being substitutable on their own and independently of one another by one or a number of the aforementioned groups and by alkoxy, aryloxy, hetaryloxy, alkythio, arylthio, hetarylthio, acyl, aroyl, hetaroyl, acyloxy, aroyloxy, hetaroyloxy, alkoxycarbonyl, aryloxycarbonyl, hetaryloxycarbonyl, amino, alkylamino, dialkylamino, alkylsulfonyl, arylsulfonyl, fluorine, chlorine, bromine, iodine, hydroxy, cyano, nitro, sulfo, carbonyl, carboxy, carbamoyl, sulfamoyl,
NR¹R² and/or NR³R⁴ and/or NR⁵R⁶ can stand for a 3-6-element ring system containing nitrogen and optionally aromatic, which optionally contain further heteroatoms such as oxygen, nitrogen or sulphur and can be substituted by the aforementioned groups, and two moieties R of different amino groups can together form an alkylene or alkenylene chain thus forming a 5-8-element ring system which can optionally contain one or more heteroatoms such as oxygen, nitrogen or sulphur and be substituted by the aforementioned groups,
and salts, tautomers and metal complexes of compounds with the general formula (I) which have a urease-inhibiting effect.

2. The use of the 1,1,3,3,3-pentaamino-1-oxo/thio-1λ⁵,3λ⁵-diphosphaz-2-enes according to Claim 1 and the compounds with formulae (II) and (III):
and the salts, tautomers and metal complexes of the latter which have a 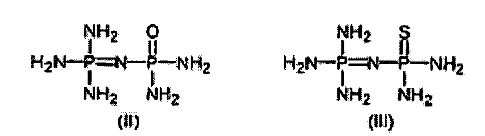
urease-inhibiting effect, as means for regulating and inhibiting enzymatic hydrolysis of urea.

3. A method for producing the 1,1,3,3,3-pentaamino-1-oxo/thio-1λ⁵,3λ⁵-diphosphaz-2-enes according to Claim 1 or 2, **characterised in that**
a) 1,1,3,3,3-pentachlorine-1-oxo/thio-1λ⁵,3λ⁵-diphosphaz-2-ene (A) is made to react with one or with up to 3 different amines, optionally in an inert organic solvent, optionally in the presence of a tertiary base and optionally in a protective gas atmosphere at -50 to 100°C corresponding to equation (1) to form type (B) compounds: 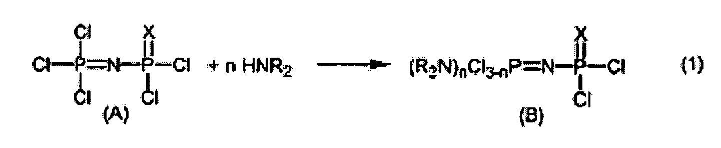 and then
b) the type (B) compounds formed in step a) are made to react with ammonia, optionally in an inert organic solvent, at temperatures of -80 to 20°C according to equation (2) to form the desired end product:

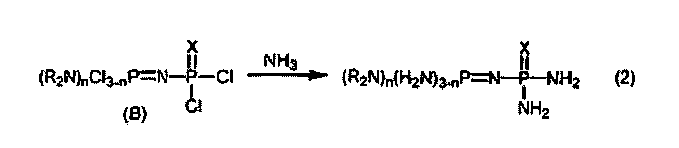

4. A composition, **characterised in that** it contains at least one 1,1,3,3,3-pentaamino-1-oxo/thio-1λ⁵,3λ⁵-diphosphaz-2-ene according to Claim 1 or 2 in a quantity sufficient to inhibit urease and optionally agriculturally and/or physiologically acceptable or compatible or desired carrier, extender or thinning agents, additives and optionally further active agents.

5. The composition according to Claim 4, **characterised in that**, as a further active agent, at least one nitrification inhibitor is included in an amount effective for the inhibition of nitrification.

6. The compound according to Claim 5, **characterised in that** the nitrification inhibitor is selected from one or more of the following compounds:
a) pyrazole derivatives with the general formula (IV), or salts or
complex compounds of the latter: 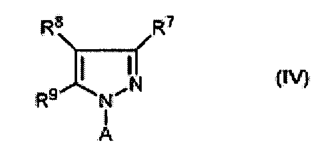 in which
R⁷, R⁸, R9, independently of one another, signify hydrogen, halogen, C₁-C₈-alkyl, or C₃-C₈-cycloalkyl
and
A signifies the moiety H
or the moiety 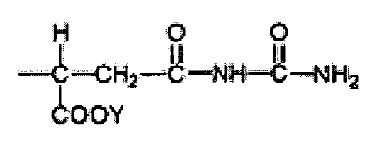 with Y = H, Na, K, NH₄
or the moiety
-CH₂-B with B = (di)alkylamino, 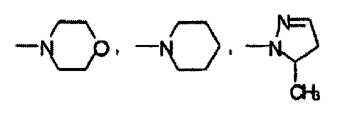 or the moiety 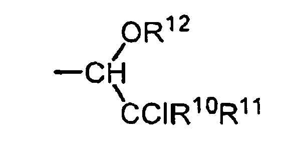 with R¹⁰ , R¹¹ = H or Cl and 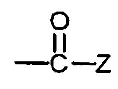 with Z = C₁-C₈-alkoxy, C₁-C₈
R¹² = H or
alkylamino, C₆-C₁₀-arylamino or the moiety 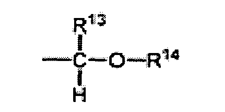 with R¹³, R¹⁴ = H, C₁-C₈-alkyl, C₇-C₁₈-alkylaryl, C₆-C₁₀-aryl or the moieties 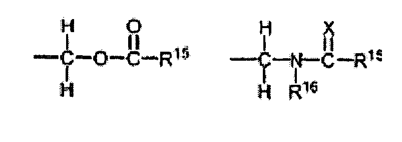 with R¹⁵ = C₁-C₂₀-alkyl, C₃-C₈-cycloalkyl, C₆-C₁₀-aryl or alkylaryl from C₁-C₄-alkyl and C₆-C₁₀-aryl groups; with X = oxygen or sulphur and with R¹⁶ = C₁-C₄-alkyl, C₃-C₈-cycloalkyl, C₆-C₁₀-aryl or H,
and the alkyl and aryl moieties listed can be substituted by themselves or by C₁-C₄-alkylsulfonyl, C₁-C₄-alkoxyl, C₁-C₄-acyl, halogen, hydroxyl, trimethylsilyl, amino, nitro, cyano, carbonyl, carboxyl or C₁-C₅-carboxyalkyl,
b) 1 H-1,2,4-triazoles or the salts or complex compounds of the latter,
c) dicyandiamide.

7. A fertiliser composition, **characterised in that** it contains at least one urea-based mineral and/or organic fertiliser and at least one 1,1,3,3,3-pentaamino-1-oxo/thio-1λ⁵, 3λ⁵-diphosphaz-2-ene according to Claim 1 or 2 and/or a composition according to any of Claims 4 to 6 or at least one 1,1,3,3,3-pentaamino-1-oxo/thio-1λ⁵,3λ⁵-diphosphaz-2-ene according to Claim 1 or 2 and at least one nitrification inhibitor defined in Claim 6 respectively in a quantity sufficient to inhibit urease or to inhibit nitrification.

8. The fertiliser composition according to Claim 7, **characterised in that** at least one 1,1,3,3,3-pentaamino-1-oxo/thio-1λ⁵,3λ⁵-diphosphaz-2-ene according to Claim 1 or 2 is included in a quantity of 0.01 to 10 % by weight in relation to the weight of the urea-based fertiliser.

9. The fertiliser composition according to Claim 7, **characterised in that** at least one of the nitrification inhibitors defined in Claim 6 is included in a quantity of 0.01 to 10 % by weight in relation to the weight of the urea-based fertiliser.

10. The use of the 1,1,3,3,3-pentaamino-1-oxo/thio-1⁵,3λ⁵-diphosphaz-2 enes according to Claim 1 or 2 or the compositions according to any of Claims 4 to 6 in order to regulate or inhibit the urease-catalysed hydrolysis of urea.

11. The use of the 1,1,3,3,3-pentaamino-1-oxo/thio-11λ⁵,3λ⁵-diphosphaz-2-enes according to Claim 1 or 2 or the compositions according to any of Claims 4 to 6 in order to reduce the nitrogen losses when fertilising with fertilising urea or urea-based fertilisers.

12. The use of the 1,1,3,3,3-pentaamino-1-oxo/thio-1λ⁵,3λ⁵-diphosphaz-2-enes according to Claim 1 or 2 or the compositions according to any of Claims 4 to 6 in order to reduce ammonia contamination from the dung or the animal excrement in animal sheds.

13. The use of 1,1,3,3,3-pentaamino-1-oxo/thio-1λ⁵,3λ⁵-diphosphaz-2-enes according to Claim 1 or 2 or the compositions according to any of Claims 4 to 6 in order to avoid toxic effects when feeding feed urea within the framework of animal feed.

14. The use of 1,1,3,3,3-pentaamino-1-oxo/thio-1λ⁵,31λ⁵-diphosphaz-2-enes according to Claim 1 or 2 or the compositions according to any of Claims 4 to 6 for fertigation.

## Revendications

1. 1,1,3,3,3-pentaamino-1-oxo/thio-1λ⁵,3λ⁵-diphosphaz-2-ènes répondant à la formule générale (I) : 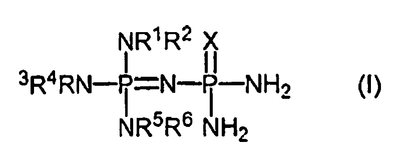 dans laquelle :
X représente un atome d'oxygène ou de soufre,
R¹, R², R³, R⁴, R⁵, R⁶ représentent, indépendamment les uns des autres, un atome d'hydrogène, un groupe alkyle/hétéroalkyle en C₁-C₈, alcényle/hétéroalcényle en C₂-C₈, alcinyle/hétéroalcinyle en C₂-C₈, cycloalkyle/hétérocycloalkyle en C₃-C₈, cycloalcényle/hétérocycloalcényle en C₃-C₈, aryle en C₆-C₁₀/hétéroaryle en C₅-C₁₀), aralkyle, hétéroarylalkyle, alkaryle, alkhétéroaryle, dans lesquels au moins un radical R ne représente pas l'hydrogène et les radicaux R¹ à R⁶ peuvent être, éventuellement eux-mêmes et indépendamment les uns des autres, substitués par un ou plusieurs des groupes cités ci-dessus ainsi que par les groupes alcoxy, aryloxy, hétéroaryloxy, alkylthio, arylthio, hétéroarylthio, acyle, aroyle, hétéroaroyle, acyloxy, aroyloxy, hétéroaroyloxy, alcoxycarbonyle, aryloxycarbonyle, hétéroaryloxycarbonyle, amino, alkylamino, dialkylamino, alkylsulfonyle, arylsulfonyle, fluoro, chloro, bromo, iodo, hydroxy, cyano, nitro, sulfo, carbonyle, carboxy, carbamoyle, sulfamoyle,
NR¹R² et/ou NR³R⁴ et/ou NR⁵R⁶ représentent un système cyclique de 3 à 6 chaînons, azoté, éventuellement aromatique, lequel peut éventuellement contenir d'autres hétéroatomes, tels que oxygène, azote ou soufre, et peut être substitué par des groupes cités ci-dessus, et deux radicaux R de groupes amino différents peuvent former une chaîne alkylène ou alcénylène en formant un système cyclique de 5 à 8 chaînons qui peut éventuellement contenir un ou plusieurs hétéroatomes, tels que oxygène, azote ou soufre et peut être substitué par les groupes cités ci-dessus,
ainsi que les sels, tautomères et complexes métalliques des composés répondant à la formule générale (I) présentant un effet inhibiteur de l'uréase.

2. Utilisation des 1,1,3,3,3-pentaamino-1-oxo/thio-1λ⁵,3λ⁵-diphosphaz-2-ènes selon la revendication 1 ainsi que des composés répondant aux formules (II) et (III) : 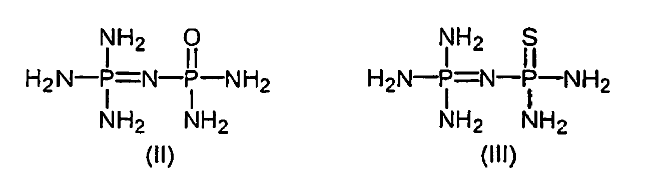 ainsi que de leurs sels, tautomères et complexes métalliques présentant un effet inhibiteur de l'uréase, en tant qu'agents de régulation ou d'inhibition de l'hydrolyse enzymatique de l'urée.

3. Procédé de préparation de 1,1,3,3,3-pentaamino-1-oxo/thio-1λ⁵,3λ⁵-diphosphaz-2-ènes selon la revendication 1 ou 2, **caractérisé en ce que**
a) on fait réagir du 1,1,3,3,3-pentachlor-1-oxo/thio-1λ⁵,3λ⁵-diphosphaz-2-ène (A) avec une, ou jusqu'à trois amines différentes, éventuellement dans un solvant organique inerte, éventuellement en présence d'une base tertiaire et éventuellement sous atmosphère protectrice, entre -50 et 100°C conformément à l'équation (1) pour obtenir les composés du type (B) : 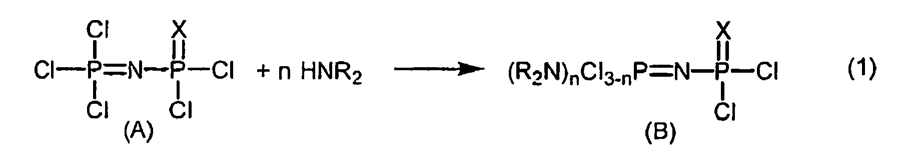 à la suite de quoi b) on fait réagir les composés du type (B) formés au cours de l'étape a) avec de l'ammoniaque, éventuellement dans un solvant organique inerte, à des températures allant de -80 à 20 °C conformément à l'équation (2) pour obtenir le produit final recherché :

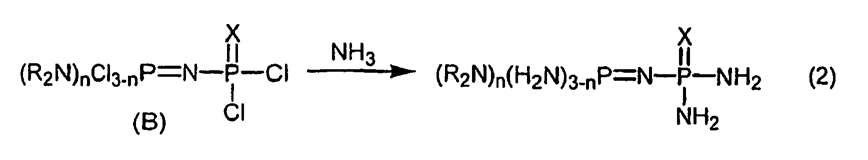

4. Composition **caractérisée en ce qu'**elle renferme au moins un 1,1,3,3,3-pentaamino-I-oxo/thio-1λ⁵,3λ⁵-diphosphaz-2-ène selon la revendication 1 ou 2 dans une quantité suffisante pour inhiber l'uréase en association éventuelle avec des supports, des charges, des diluants, des adjuvants et éventuellement d'autres substances actives acceptables, compatibles ou désirables du point de vue agricole et/ou physiologique.

5. Composition selon la revendication 4, **caractérisée en ce que** l'on inclut comme autre substance active au moins un inhibiteur de nitrification dans une quantité efficace pour l'inhibition de la nitrification.

6. Composition selon la revendication 5, **caractérisée en ce que** l'inhibiteur de nitrification est choisi parmi un ou plusieurs des composés suivants :
a) les dérivés du pyrazole répondant à la formule générale (IV), sels ou complexes de celui-ci : 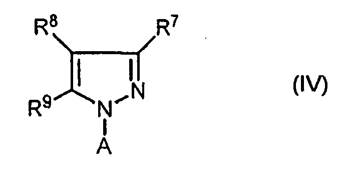 dans laquelle R⁷, R⁸, R⁹ représentent indépendamment les uns des autres des atomes d'hydrogène, d'halogène, des groupes alkyle en C₁-C₈, ou cycloalkyle en C₃-C₈
et
A représente le radical H
ou le radical 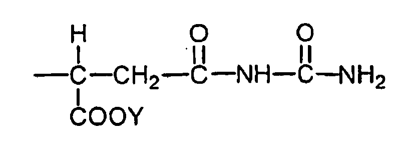 où Y représente H, Na, K, NH₄
ou le radical
-CH₂-B où 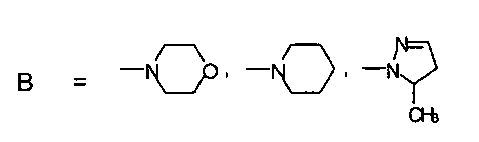 (di)alkylamino,
ou le radical 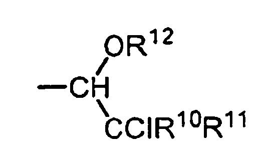 où R¹⁰, R¹¹ = H ou CI et 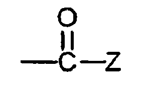 où Z = alcoxy en C₁-C₈, alkylamino en C₁-C₈, R¹²=H ou arylamino en C₆-C₁₀
ou le radical 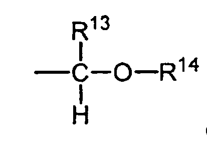 où R¹³, R¹⁴ = H, alkyle en C₁-C₈, alkyle en C₇-C₁₈, aryle en C₆-C₁₀ ou les radicaux 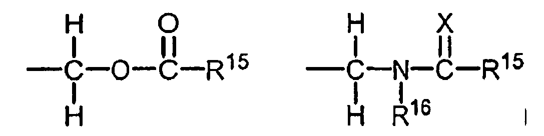 où R¹⁵ = alkyle en C₁-C₂₀, cycloalkyle en C₃-C₈, aryle en C₆-C₁₀ ou un groupe alkylaryle composé de groupes alkyle en C₁-C₄ et aryle en C₆-C₁₀; X = oxygène ou soufre et R¹⁶ = alkyle en C₁-C₄, cycloalkyle en C₃-C₈, aryle en C₆-C₁₀ ou H,
et dans laquelle les radicaux alkyle et aryle mentionnés peuvent être substitués l'un par l'autre ainsi que par des groupes alkylsulfonyle en C₁-C₄, alcoxy en C₁-C₄, acyle en C₁-C₄, halogéno, hydroxyle, triméthylsilyle, amino, nitro, cyano, carbonyle, carboxyle ou carboxyalkyle en C₁-C₅,
b) les 1 H-1,2,4-triazoles, leurs sels ou complexes,
c) le dicyandiamide.

7. Composition fertilisante, **caractérisée en ce qu'**elle renferme au moins un engrais minéral et/ou organique à base d'urée ainsi qu'au moins un 1,1,3,3,3-pentaamino-1-oxo/thio-1λ⁵,3λ⁵-diphosphaz-2-ène selon la revendication 1 ou 2 et/ou une composition selon l'une des revendications 4 à 6 ou au moins un 1,1,3,3,3-pentaamino-1-oxo/thio-1λ⁵,3λ⁵-diphosphaz-2-ène selon la revendication 1 ou 2 et au moins un inhibiteur de nitrification tel que défini dans la revendication 6, respectivement dans une quantité suffisante pour une inhibition de l'uréase ou une inhibition de la nitrification.

8. Composition fertilisante selon la revendication 7, **caractérisée en ce qu'**elle renferme au moins un 1,1,3,3,3-pentaamino-1-oxo/thio-1λ⁵,3λ⁵-diphosphaz-2-ène selon la revendication 1 ou 2 dans une quantité allant de 0,01 à 10 % en poids, rapportée au poids de l'engrais à base d'urée.

9. Composition fertilisante selon la revendication 7, **caractérisée en ce qu'**au moins un des inhibiteurs de nitrification définis dans la revendication 6 est contenu dans une quantité allant de 0,01 à 10 % en poids, rapportée au poids de l'engrais à base d'urée.

10. Utilisation des 1,1,3,3,3-pentaamino-1-oxo/thio-1⁵,3λ⁵-diphosphaz-2-ènes selon la revendication 1 ou 2 ou des compositions selon l'une des revendications 4 à 6 pour la régulation ou l'inhibition de l'hydrolyse de l'urée catalysée par l'uréase.

11. Utilisation des 1,1,3,3,3-pentaamino-1-oxo/thio-1λ⁵,3λ⁵-diphosphaz-2-ènes selon la revendication 1 ou 2 ou des compositions selon l'une des revendications 4 à 6 pour la réduction des pertes azotées dans le cadre de la fertilisation mettant en oeuvre de l'urée fertilisante ou des engrais à base d'urée.

12. Utilisation des 1,1,3,3,3-pentaamino-1-oxo/thio-1λ⁵,3⁵-diphosphaz-2-ènes selon la revendication 1 ou 2 ou des compositions selon l'une des revendications 4 à 6 pour la réduction de l'impact de l'ammoniac issu des effluents d'élevage ou des excréments des animaux d'élevage.

13. Utilisation des 1,1,3,3,3-pentaamino-1-oxo/thio-1λ⁵,3λ⁵-diphosphaz-2-ènes selon la revendication 1 ou 2 ou des compositions selon l'une des revendications 4 à 6 pour la prévention des effets toxiques lors de l'apport d'urée fourragère dans le cadre de l'alimentation animale.

14. Utilisation des 1,1,3,3,3-pentaamino-1-oxo/thio-1λ⁵,3λ⁵-diphosphaz-2-ènes selon la revendication 1 ou 2 ou des compositions selon l'une des revendications 4 à 6 pour la fertigation.
